# FASCICULE DE BREVET EUROPEEN

(11) **EP 0 742 998 B1**
(45) Date de publication et mention de la délivrance du brevet: **01.08.2001**
(21) Numéro de dépôt: 96401039.1
(22) Date de dépôt: 13.05.1996
(51) Int. Cl.: A01J 25/15, A01J 25/11

(54) **Procédé et installation pour éliminer par presssage le lactosérum contenu dans du caillé**
Verfahren und Vorrichtung um die im Bruch enthaltete Molke durch Pressen zu Entfernen
Process and installation to withdraw by pressing the lactoserum contained in the curd

(30) Priorité: 15.05.1995 FR 9505715
(43) Date de publication de la demande: 20.11.1996
(73) Titulaire: SOCIETE D'ETUDE, REALISATION ET VENTE A L'INDUSTRIE, SERVI S.A., 37130 Langeais (FR)
(72) Inventeur: Helaine, Christian, 37130 Cinq Mars la Pile (FR)
(74) Mandataire: Lemoine, Robert

(56) Documents cités:
- WO-A-79/00837
- WO-A-82/01976
- US-A- 3 748 072
- US-A- 3 763 769

## Description

La présente invention concerne un procédé pour éliminer par pressage le lactosérum contenu dans du caillé disposé dans un moule à fromage microperforé placé dans une enceinte étanche, ainsi qu'une installation pour la mise en oeuvre de ce procédé.

Les moules à fromage microperforés sont généralement réalisés en matière plastique. Ils ont été mis au point pour remplacer les moules en bois ou en métal qui devaient être utilisés avec des toiles, et ont permis une plus grande mécanisation des opérations de pressage.

Les fromages réalisés actuellement dans les moules microperforés n'ont toutefois pas la qualité de ceux obtenus par pressage dans les moules à toile qui, en permettant le "méchage" du lactosérum, évitaient l'apparition de défauts superficiels et la formation de poches de lactosérum internes.

Cette contre-performance des moules microperforés est due en partie au tramage réalisé sur leur surface interne, qui empêche une évacuation complète du lactosérum. Sous l'effet de la pression, la pâte à fromage emprisonne en effet entre elle et la surface interne des moules une certaine quantité de lactosérum qui provoque une mauvaise fermeture de la pâte.

La contre-performance des moules microperforés est due également au fait que ceux-ci sont généralement réalisés en polypropylène. Or ce matériau, qui est hydrophobe, ne permet pas de maintenir la couche de fromage superficielle à un degré d'humidité convenable, de sorte que cette couche a tendance à sécher et à devenir imperméable, favorisant ainsi la formation des poches de lactosérum internes.

Le brevet américain US-A-3 748 072 décrit un dispositif utilisé dans la fabrication du fromage et dans lequel une masse de caillé disposée dans un moule est comprimée tout en étant soumise à l'action d'une dépression.

Ce dispositif ne permet toutefois pas d'éliminer correctement le lactosérum contenu dans le caillé.

En effet, la paroi latérale du moule et la paroi latérale de l'enceinte renfermant le moule ménagent entre elles un espace cylindrique étroit que doit emprunter le lactosérum pour être évacué.

Or, comme le caillé est comprimé à la partie supérieure de l'enceinte, une partie non négligeable du lactosérum pénétrant dans l'espace cylindrique s'écoule devant les orifices des conduits reliés à la source de vide, risquant ainsi d'être aspiré et de perturber le bon fonctionnement de cette dernière.

Le procédé selon l'invention permet d'éliminer le lactosérum dans de bonnes conditions grâce à sa caractéristique qui consiste à réaliser au moins deux cycles de pressage comprenant chacun une première phase dans laquelle on exerce une pression sur le caillé contenu dans le moule tout en créant une dépression dans l'enceinte, et une seconde phase dans laquelle on cesse d'exercer la pression sur le caillé tout en créant dans l'enceinte une pression au moins égale à la pression atmosphérique.

Les cycles de pressage du procédé selon l'invention permettent une élimination uniforme et complète du lactosérum situé aussi bien à l'intérieur du caillé qu'au niveau de la surface interne du moule.

Les essais réalisés lors de la mise au point de ce procédé ont en effet montré que la répétition des cycles de pressage permet au caillé de se décoller légèrement de la surface interne du moule, ce qui favorise l'évacuation du lactosérum en surface.

En fait, la succession des mises en dépression/pression conduit à exercer sur le caillé une action équivalente à un pressage traditionnel avec retournements multiples.

Selon un mode de mise en oeuvre particulier du procédé conforme à l'invention, chaque cycle de pressage a une durée d'environ 30 minutes et peut être répété jusqu'à dix fois suivant la nature du caillé.

Selon ce mode de mise en oeuvre, les durées des première et seconde phases de chaque cycle sont de préférence de l'ordre de 20 à 25 mn et de 30 secondes à 2 mn, respectivement.

Par ailleurs, la pression sur le caillé est de préférence de l'ordre de 10⁴ à 5.10⁴ Pa et la dépression dans l'enceinte de l'ordre de 10³ à 3.10⁴ Pa pendant la première phase tandis que la pression dans l'enceinte est une surpression de préférence inférieure ou égale à 5.10⁴ Pa pendant la seconde phase.

La présente invention a également pour objet une installation permettant la mise en oeuvre du procédé décrit ci-dessus, cette installation comprenant une enceinte étanche renfermant au moins un moule à fromage microperforé contenant du caillé, un plateau en contact avec le caillé par l'intermédiaire d'une plaque, des moyens de pressage pour déplacer le plateau en direction du caillé, une source de vide pour créer une dépression dans l'enceinte, et des moyens pour créer dans l'enceinte une pression au moins égale à la pression atmosphérique, et étant caractérisée en ce que :
- le caillé supporte la plaque tandis que le plateau est solidaire d'une pièce s'appuyant sur la plaque ;
- l'enceinte est constituée par un récipient vertical comportant un fond sur lequel repose le moule et une paroi latérale le long de laquelle le plateau est déplaçable de manière étanche ; et
- les moyens de pressage sont constitués par une dépression créée dans le récipient.

Afin d'augmenter la quantité de caillé traitée dans l'installation selon ce mode de réalisation, le récipient peut avantageusement supporter au moins un second récipient vertical comportant un fond sur lequel repose un second moule contenant du caillé et une paroi latérale le long de laquelle un second plateau est déplaçable de manière étanche, le second plateau étant solidaire d'une seconde pièce s'appuyant sur une seconde plaque reposant sur le caillé, des moyens de liaison étant en outre prévus pour relier les volumes internes des récipients superposés.

On notera ici que la pression exercée sur le caillé contenu dans un moule prédéterminé ne dépend pas du poids du moule situé au-dessus puisque le récipient contenant ce moule repose non pas sur le moule prédéterminé mais sur le récipient qui renferme ledit moule prédéterminé.

Cette installation permet donc de réaliser une pression uniforme sur le caillé contenu dans tous les moules, quelle que soit la position en hauteur de ces derniers.

Avantageusement, chaque récipient comporte au moins un conduit vertical communiquant avec son volume interne, les conduits verticaux des récipients superposés étant disposés les uns à la suite des autres et raccordés entre eux de manière étanche, l'un au moins des conduits verticaux étant apte à être relié sélectivement à la pompe à vide et à la source d'air comprimé.

Grâce à cette disposition qui permet de créer rapidement, selon les besoins, une pression ou une dépression dans chaque récipient, l'installation peut être utilisée pour égoutter des quantités importantes de caillé dans des délais limités et d'abaisser par conséquent le prix de revient des fromages.

De préférence, chaque plateau délimite avec le fond du récipient situé immédiatement au-dessus une chambre reliée à l'atmosphère.

Le fait que les chambres ménagées entre les récipients soient reliées à l'atmosphère permet aux différents plateaux de se déplacer librement sous l'effet de la pression ou de la dépression créée sous eux, ce qui ne serait pas le cas si ces chambres étaient isolées de l'extérieur.

Avantageusement, chaque récipient est pourvu sur son fond de nervures sur lesquelles le moule correspondant est fixé.

Les nervures sont prévues pour maintenir les moules hors du lactosérum accumulé dans les récipients. Par ailleurs, comme les moules sont fixés sur les nervures, par exemple par encliquetage, ils ne risquent pas d'être entraînés par les plateaux lorsque ceux-ci se déplacent vers le haut.

Selon encore un autre mode de réalisation particulier de l'invention, l'enceinte est montée rotative, chaque moule étant disposé radialement tandis que le plateau associé est tourné vers l'axe de rotation de l'enceinte et qu'une masse amovible repose directement sur chaque plateau.

Plusieurs modes d'exécution de la présente invention seront décrits ci-après à titre d'exemples nullement limitatifs en référence aux dessins annexés dans lesquels :
- la figure 1 est une vue en coupe schématique d'une installation ne faisant pas partie de l'invention ;
- la figure 2 est une vue en coupe schématique d'une installation conforme à l'invention ;
- la figure 2A représente à échelle agrandie le détail de la figure 2, qui est situé à l'intérieur d'un cercle ;
- la figure 3 est une vue en coupe schématique selon la ligne III-III de la figure 2 ;
- les figures 4 à 8 sont des vues en coupe montrant cinq variantes de réalisation des moyens de pressage de l'installation représentée sur la figure 1 ; et
- la figure 9 est une vue de dessus schématique d'une autre installation conforme à l'invention.

Les installations représentées sur les dessins ont été mises au point pour améliorer les conditions de pressage du caillé utilisé pour fabriquer des fromages à pâte pressée.

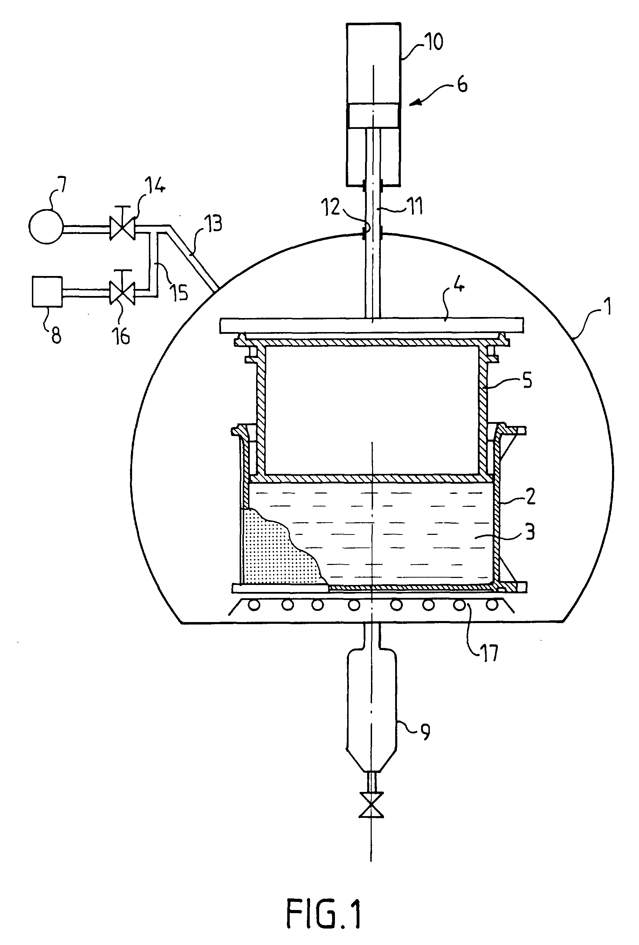

L'installation visible sur la figure 1 comprend une enceinte étanche 1 renfermant un moule à fromage microperforé 2 contenant du caillé 3, un plateau 4 porté par une pièce rapportée 5 reposant sur le caillé, des moyens de pressage 6 pour déplacer le plateau 4 en direction du caillé, une source de vide 7 connue en soi pour créer une dépression dans l'enceinte, des moyens 8 pour créer dans cette dernière une pression au moins égale à la pression atmosphérique, et une cuve 9 située sous l'enceinte pour récupérer le lactosérum à sa sortie des microperforations du moule.

Les moyens permettant d'accéder à l'intérieur de l'enceinte, qui sont de conception classique, n'ont pas été représentés afin de simplifier la figure 1.

Dans l'exemple représenté, l'enceinte 1 ne comporte qu'un seul moule. Il va de soi cependant qu'elle pourrait avoir une forme allongée et renfermer plusieurs moules microperforés 2 disposés les uns à la suite des autres, un plateau 4, une pièce rapportée 5 et des moyens de pressage 6 étant alors associés à chaque moule.

Selon la figure 1, les moyens de pressage 6 sont constitués par un vérin disposé verticalement, dont le cylindre 10 est situé à l'extérieur de l'enceinte 1 et dont la tige de piston 11 porte le plateau 4 à son extrémité libre.

Afin d'éviter l'apparition de fuites au niveau de l'orifice 12 ménagé dans la paroi de l'enceinte pour le passage de la tige de piston 11, des moyens d'étanchéité sont avantageusement interposés entre cette dernière et la surface interne de l'orifice 12

On notera ici que le vérin pourrait être hydraulique ou pneumatique et être entièrement situé à l'intérieur de l'enceinte.

La source de vide 7 est de préférence une pompe à vide susceptible d'être reliée à l'enceinte 1 par une conduite 13 pourvue d'une vanne 14 alors que les moyens 8 sont de préférence une source d'air comprimé susceptible d'être reliée à la conduite 13, entre l'enceinte 1 et la vanne 14, par une conduite 15 pourvue d'une vanne 16.

Pour être complet, on précisera encore que le moule 2 repose sur un support 17 prévu sur le fond de l'enceinte, ce qui permet de le maintenir au-dessus du lactosérum recueilli dans l'enceinte.

On va maintenant décrire les différentes opérations qu'il convient d'effectuer pour mettre en oeuvre le procédé selon l'invention.

Tout d'abord, on introduit le moule 2 rempli de caillé 3 dans l'enceinte 1, on le dispose sur le support 17, et on place la pièce rapportée 5 sur le caillé 3.

Après avoir fermé de manière étanche les moyens prévus pour accéder à l'intérieur de l'enceinte, on peut maintenant réaliser le cycle de pressage.

Dans un premier temps, on actionne le vérin 6 de façon à exercer une pression sur le caillé, et on ouvre simultanément la vanne 14 pour créer une dépression dans l'enceinte.

Pendant cette première opération, dont la durée est de l'ordre de 20 à 25 mn, on fait en sorte que la pression exercée sur le caillé par le vérin soit de l'ordre de 10⁴ à 5.10⁴ Pa et que la dépression à l'intérieur de l'enceinte soit de l'ordre de 10³ à 3.10⁴ Pa.

Puis, dans un second temps, on actionne le vérin 6 en sens inverse afin de ne plus exercer de pression sur le caillé et, simultanément, on ferme la vanne 14 et on ouvre la vanne 16 afin de créer dans l'enceinte une pression au moins égale à la pression atmosphérique.

Pendant cette seconde opération, dont la durée est de l'ordre de 30 secondes à 2 mn, il est préférable que la pression dans l'enceinte soit une surpression inférieure ou égale à 5.10⁴ Pa.

Le cycle de pressage décrit ci-dessus évite la formation de poches de lactosérum à l'intérieur de la pâte à fromage ainsi que l'apparition de défauts de fermeture à la surface de celle-ci. Il est cependant nécessaire de le répéter une seconde fois, et même souhaitable une dizaine de fois, lorsque le caillé provient d'un lait d'origine particulière.

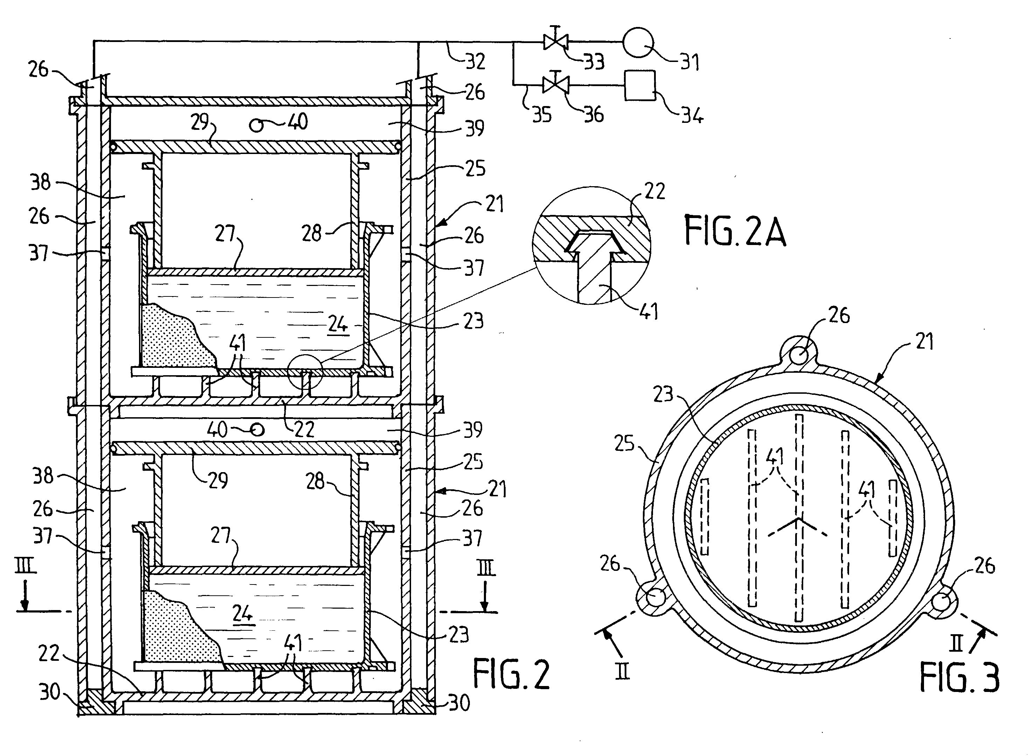

L'installation représentée sur la figure 2 comprend plusieurs récipients superposés 21 comportant un fond 22 sur lequel repose un moule microperforé 23 rempli de caillé 24, et une paroi latérale 25 pourvue sur sa face externe de trois conduits verticaux 26 équidistants angulairement les uns des autres.

Bien entendu, le nombre des conduits 26 pourrait être inférieur ou supérieur à trois.

Le caillé 24 contenu dans chaque moule 23 supporte une plaque 27 sur laquelle s'appuie une pièce rapportée 28 solidaire d'un plateau mobile 29 dont la périphérie s'appuie de manière étanche contre la paroi latérale 25 du récipient correspondant.

Les conduits verticaux 26 du récipient inférieur 21 sont fermés à leur extrémité inférieure par des bouchons 30 et sont situés dans le prolongement des conduits verticaux de tous les autres récipients 21.

En outre, les conduits verticaux 26 du récipient le plus haut sont susceptibles d'être reliés de manière étanche à une source de vide 31 par l'intermédiaire d'une canalisation 32 pourvue d'une vanne 33 et à une source d'air comprimé 34 par l'intermédiaire d'une canalisation 35 pourvue d'une vanne 36, la canalisation 35 étant raccordée à la partie de la canalisation 32 qui est séparée de la source de vide 31 par la vanne 33.

On précisera à toutes fins utiles que des dispositifs d'étanchéité classiques non représentés sont prévus entre les conduits 26 situés dans le prolongement les uns des autres afin d'éviter la formation de fuites entre les différents récipients 21.

La figure 2 montre par ailleurs que des orifices 37 sont ménagés dans les parois latérales 25 des récipients pour relier les volumes internes 38 de ces derniers aux conduits verticaux correspondants 26.

Elle montre également que chaque plateau 29 délimite avec le fond 22 du récipient 21 situé immédiatement au-dessus, une chambre 39 reliée à l'atmosphère, des orifices 40 étant ménagés dans les parois latérales 25 des différents récipients, entre chaque plateau 29 et le fond adjacent 22.

On indiquera enfin que les fonds 22 des récipients 21 sont pourvus sur leur face supérieure de nervures parallèles 41 supportant les récipients 23 et que ceux-ci sont encliquetés sur les nervures 41, comme le montre la figure 2A.

On va maintenant décrire les différentes opérations qu'il convient d'effectuer pour utiliser l'installation représentée sur la figure 2.

Tout d'abord, on encliquète les moules 23 remplis de caillé 24 sur les nervures 41 faisant saillie sur le fond 22 des récipients 21, on met en place les plaques 27 sur le caillé contenu dans les récipients et on installe les pièces rapportées 28 sur les plaques 27.

On superpose maintenant les récipients 21 en veillant à ce que le récipient dont les conduits 26 sont fermés d'un côté par les bouchons 30 soit situé à la partie inférieure de l'empilement, et en s'assurant que les conduits 26 des récipients superposés soient dans le prolongement les uns des autres et reliés entre eux de manière étanche.

On relie ensuite les extrémités supérieures des conduits du récipient le plus haut à la canalisation 32, les vannes 33 et 36 ayant été préalablement fermées.

On peut maintenant réaliser le pressage du caillé contenu dans les récipients 21.

Dans un premier temps, on ouvre la vanne 33 afin de relier les récipients 21 à la source de vide 31 et de créer une dépression D dans leur volume interne 38.

Sous l'action de cette dépression D, les plateaux 29 soumettent alors le caillé 24 contenu dans les moules 23 à une pression prédéterminée. En général, cette pression est exercée pendant environ 20 à 25 mn et a une valeur de l'ordre de 10⁴ à 5.10⁴ Pa.

Dans un second temps, on ferme la vanne 33 et l'on ouvre la vanne 36 afin de relier les récipients à la source d'air comprimé 34 et de créer une surpression dans leur volume interne 38. En général, cette surpression est exercée pendant environ 30 secondes à environ 2 mn est de préférence inférieure ou égale à 5.10⁴ Pa.

Sous l'action de cette surpression, les plateaux 29 se déplacent vers le haut et cessent d'exercer leur action de pressage sur le caillé.

L'avantage du cycle de pressage qui vient d'être décrit est qu'il contraint le caillé de se décoller légèrement de la surface interne des moules qu'il facilite ainsi l'évacuation du lactosérum.

On notera ici que les plateaux n'entraînent pas avec eux les moules 23 pendant leur mouvement ascensionnel, ces derniers étant encliquetés sur les nervures 41 et retenus contre ces dernières.

Le cycle de pressage qui vient d'être décrit est répété une deuxième fois et peut même l'être jusqu'à une dizaine de fois si le lait utilisé pour produire le caillé l'exige.

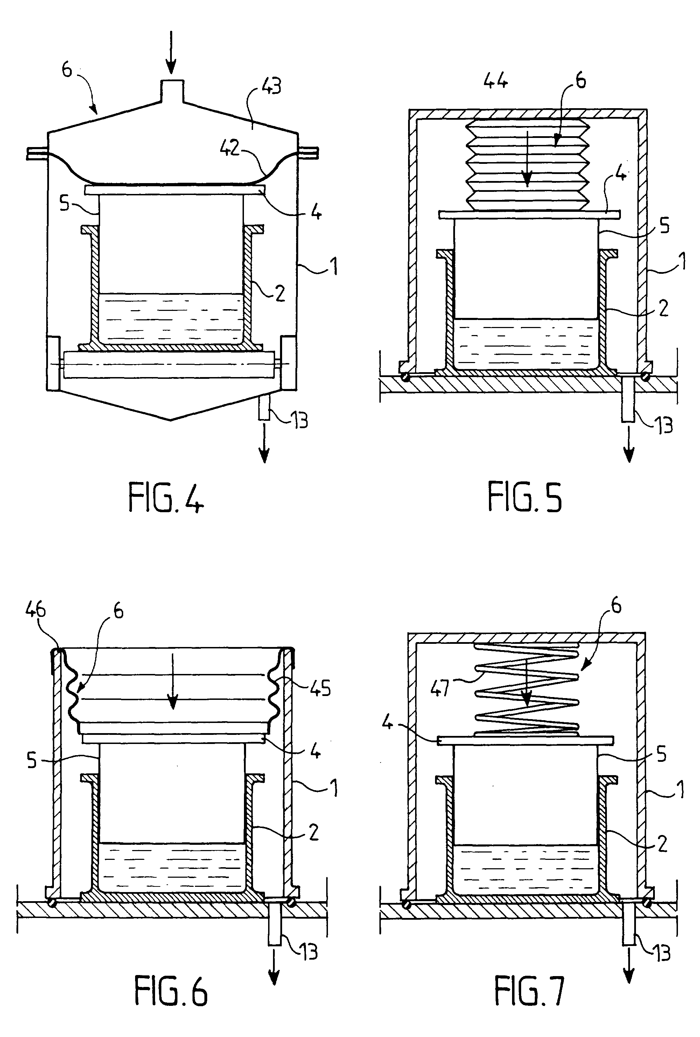

Les figures 4 à 8 représentent schématiquement des variantes de réalisation des moyens de pressage de l'installation visible sur la figure 1.

Ainsi, sur la figure 4, les moyens de pressage 6 sont constitués par une membrane souple 42 s'appuyant contre le plateau 4 et délimitant avec la partie de paroi de l'enceinte 1 qui surplombe le moule 2 une chambre 43 destinée à être reliée à une source d'air comprimé ou à l'atmosphère.

Sur la figure 5, les moyens de pressage 6 sont constitués par un coussin prégonflé 44 inséré entre le plateau 4 et la partie de la paroi de l'enceinte 1 qui surplombe ledit plateau.

Lorsqu'une dépression est créée dans l'enceinte 1, le coussin prégonflé 44 s'allonge dès que sa pression interne devient supérieure à celle régnant dans l'enceinte et sollicite donc le plateau 4 en direction du caillé contenu dans le moule 2.

Sur la figure 6, les moyens de pressage 6 sont constitués par une membrane souple 45 s'appuyant contre le plateau 4 et fixée à la périphérie d'une ouverture 46 ménagée dans la paroi de l'enceinte 1, le plateau étant situé entre l'ouverture 46 et le moule 2.

Sous l'action d'une dépression créée dans l'enceinte 1, la pression atmosphérique qui règne à l'extérieur de celle-ci contraint la membrane souple 45 à solliciter le plateau 4 vers le caillé contenu dans le moule 2.

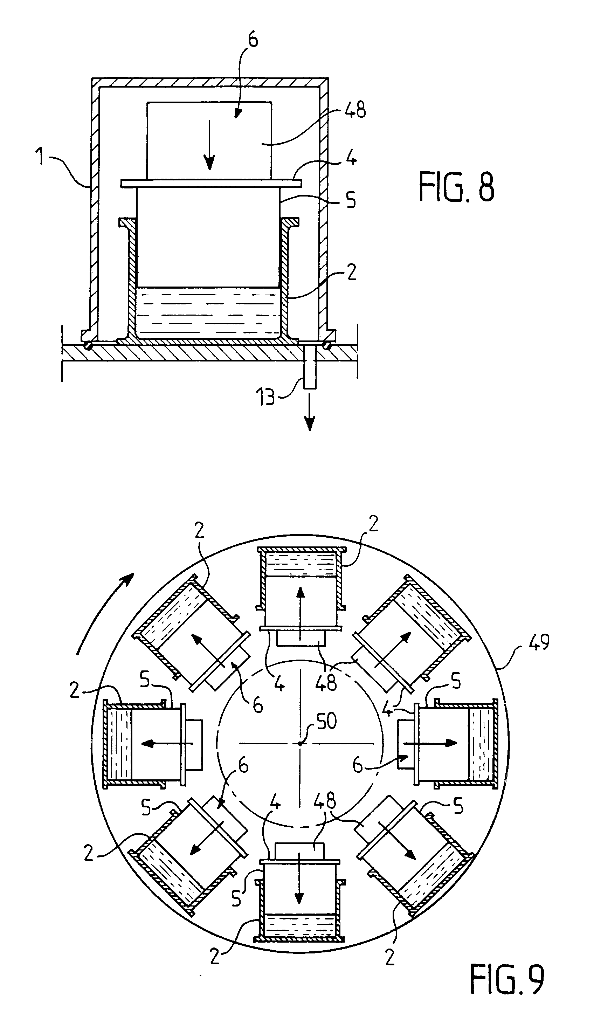

Enfin, sur la figure 7, les moyens de pressage 6 sont constitués par un ressort de compression 47 inséré entre le plateau 4 et la partie de la paroi de l'enceinte 1 qui surplombe ledit plateau, alors que sur la figure 8, ils sont constitués par une masse amovible 48 reposant directement sur le plateau 4.

L'installation représentée sur la figure 9 comprend une enceinte annulaire 49 montée rotative autour d'un axe 50 de préférence vertical et dans laquelle plusieurs moules microperforés 2 sont montés radialement.

Les moules renferment du caillé et comportent, du côté tourné vers l'axe 50, un plateau 4 s'appuyant sur le caillé par l'intermédiaire d'une pièce rapportée 5. En outre, une masse amovible 48 s'appuie sur chaque plateau 4.

On conçoit aisément que dans l'installation représentée sur la figure 9, le caillé contenu dans les moules est soumis à une pression qui est exercée par la force centrifuge engendrée lorsque l'enceinte est entraînée en rotation.

## Revendications

1. Procédé pour éliminer par pressage le lactosérum contenu dans du caillé (24) disposé dans un moule à fromage microperforé (23) placé dans une enceinte étanche (21), caractérisé en ce qu'il consiste à réaliser au moins deux cycles de pressage comprenant chacun une première phase dans laquelle on exerce une pression sur le caillé contenu dans le moule tout en créant une dépression dans l'enceinte, et une seconde phase dans laquelle on cesse d'exercer la pression sur le caillé tout en créant dans l'enceinte une pression au moins égale à la pression atmosphérique.

2. Procédé selon la revendication 1, caractérisé en ce que chaque cycle de pressage a une durée d'environ 30 minutes.

3. Procédé selon la revendication 1 ou 2, caractérisé en ce que chaque cycle de pressage est susceptible d'être répété jusqu'à dix fois suivant la nature du caillé.

4. Procédé selon l'une quelconque des revendications précédentes, caractérisé en ce que les durées des première et seconde phases de chaque cycle sont respectivement de l'ordre de 20 à 25 mn et de 30 secondes à 2 mn.

5. Procédé selon l'une quelconque des revendications précédentes, caractérisé en ce que la pression sur le caillé est de l'ordre de 10⁴ à 5.10⁴ Pa et la dépressiion dans l'enceinte de l'ordre de 10³ à 3.10⁴ Pa pendant la première phase tandis que la pression dans l'enceinte est une surpression inférieure ou égale à 10⁴ Pa pendant la seconde phase.

6. Installation pour la mise en oeuvre du procédé selon l'une quelconque des revendications précédentes, comprenant une enceinte étanche (21,49) renfermant au moins un moule à fromage microperforé (23) contenant du caillé (24), un plateau (29) en contact avec le caillé par l'intermédiaire d'une plaque (27), des moyens de pressage pour déplacer le plateau en direction du caillé, une source de vide (31) pour créer une dépression dans l'enceinte, et des moyens (34) pour créer dans l'enceinte une pression au moins égale à la pression atmosphérique, caractérisée en ce que :
- la plaque (27) repose sur le caillé (24) et supporte une pièce (28) solidaire du plateau (29) ;
- l'enceinte est constituée par un récipient vertical (21) comportant un fond (22) sur lequel repose le moule (23) et une paroi latérale (25) le long de laquelle le plateau (29) est déplaçable de manière étanche ; et
- les moyens de pressage sont constitués par une dépression (D) créée dans le récipient (21).

7. Installation selon la revendication 6, caractérisée en ce que le récipient (21) supporte au moins un second récipient vertical (21) comportant un fond (22) sur lequel repose un second moule (23) contenant du caillé (24) et une paroi latérale (25) le long de laquelle un second plateau (29) est, déplaçable de manière étanche, le second plateau étant solidaire d'une seconde piece (28) s'appuyant sur une seconde plaque (27) reposant sur le caillé, des moyens de liaison (26,37) étant en outre prévus pour relier les volumes internes (28) des récipients superposés (21).

8. Installation selon la revendication 7, caractérisée en ce que chaque récipient (21) comporte au moins un conduit vertical (26) communiquant avec son espace interne (38), les conduits verticaux des récipients superposés étant disposés les uns à la suite des autres et raccordés entre eux de manière étanche, l'un au moins des conduits verticaux (26) étant apte à être relié sélectivement à la pompe à vide (31) et à la source d'air comprimé (34).

9. Installation selon la revendication 7 ou 8, caractérisée en ce que chaque plateau (29) délimite avec le fond (22) du récipient (21) situé immédiatement au-dessus une chambre (39) reliée à l'atmosphère.

10. Installation selon l'une quelconque des revendications 6 à 9, caractérisée en ce que chaque récipient (21) est pourvu sur son fond (22) de nervures (41) sur lesquelles le moule correspondant (23) est fixé.

11. Installation selon la revendication 6, caractérisée en ce que l'enceinte (49) est montée rotative, chaque moule (2) étant disposé radialement tandis que le plateau (4) associé est tourné vers l'axe de rotation (50) de l'enceinte (49) et qu'une masse amovible (48) repose directement sur chaque plateau.

## Patentansprüche

1. Verfahren, um mit Hilfe von Druck Molke zu entfernen, die in Dick-/Sauermilch (24) enthalten ist, die sich in einer mikroferporierten Käseform (23) befindet, die in einem undurchlässigen Behälter (21) untergebracht ist, dadurch gekennzeichnet, dass das Verfahren daraus besteht, mindestens zwei Druckzyklen durchzuführen, die je eine Phase umfassen, in der ein Druck auf die Dick-/Sauermilch ausgeübt wird, die sich in der Form befindet, wobei ein Unterdruck in dem Behälter erzeugt wird, und eine zweite Phase, in der die Ausübung des Drucks auf die Dick/Sauermilch eingestellt wird, wobei in dem Behälter ein Druck erzeugt wird, der mindestens gleich dem atmosphärischen Druck ist.

2. Verfahren gemäß Patentanspruch 1, dadurch gekennzeichnet, dass jeder Druckzyklus ungefähr 30 Minuten andauert.

3. Verfahren gemäß Patentanspruch 1 oder 2, dadurch gekennzeichnet, dass jeder Druckzyklus dazu geeignet ist, diesen bis zu zehn Mal gemäß der Art der Dick/Sauermilch zu wiederholen.

4. Verfahren nach irgendeinem der vorangehenden Patentansprüche, dadurch gekennzeichnet, dass die Längen der entsprechenden ersten und zweiten Phase eines jeden Zyklusses in der Größenordnung von 20 bis 25 Minuten und von 30 Sekunden bis 2 Minuten liegen.

5. Verfahren nach irgendeinem der vorangehenden Patentansprüche, dadurch gekennzeichnet, dass der Druck auf die Dick-/Sauermilch in der Größenordnung von 10⁴ bis 5.10⁴ Pa liegt und dass der Unterdruck während der ersten Phase in dem Behälter in der Größenordnung von 10³ bis 3.10⁴ Pa liegt, während der Druck in dem Behälter ein Überdruck ist, der während der zweiten Phase unter oder gleich 10⁴ Pa ist.

6. Vorrichtung für die Anwendung des Verfahrens gemäß irgendeinem der vorangehenden Patentansprüche, die einen undurchlässigen Behälter (21, 49) beinhaltet, der mindestens eine mikroperforierte Käseform (23), die Dick/Sauermilch (24) enthält, eine Scheibe (29), die mit der Dick-/Sauermilch durch eine Platte (27) in Kontakt ist, Druckmittel, um die Scheibe in Richtung auf die Dick-/Sauermilch zu verschieben, eine Unterbrechungsschaltung (31), um einen Unterdruck in dem Behälter zu erzeugen, und Mittel (34), um in dem Behälter einen Druck zu erzeugen, der mindestens gleich dem atmösphärischen Druck ist, beinhaltet, dadurch gekennzeichnet, dass die Platte (27) auf der Dick-/Sauermilch (24) lagert und ein einstückiges Teil (28) der Scheibe (29) trägt, dass der Behälter durch ein senkrechtes Behältnis (21) gebildet ist, das einen Boden (22), auf dem die Form (23) lagert, und eine seitliche Wandung (25) beinhaltet, auf deren Länge die Scheibe (29) in undurchlässiger Art verschiebbar ist, und dass die Druckmittel durch einen Unterdruck (D) gebildet werden, der in dem Behältnis (21) erzeugt wird.

7. Vorrichtung gemäß Patentanspruch 6, dadurch gekennzeichnet, dass das Behältnis (21) mindestens ein zweites senkrechtes Behältnis (21) trägt, das einen Boden (22), auf dem eine zweite Form (23) lagert, in der sich Dick-/Sauermilch (24) befindet, und eine seitliche Wandung (25) beinhaltet, auf deren Länge eine zweite Scheibe (29) in undurchlässiger Art verschoben werden kann, wobei die zweite Scheibe mit einem zweiten Teil (28) kraftschlüssig verbunden ist, sich auf einer zweiten Platte (27) abstützt und auf der Dick-/Sauermilch lagert, wobei die Verbindungsmittel (26, 37) darüber hinaus dazu vorgesehen sind, die inneren Räume (28) der übereinanderliegenden Behältnisse (21) zu verbinden.

8. Vorrichtung gemäß Patentanspruch 7, dadurch gekennzeichnet, dass jedes Behältnis (21) mindestens ein(e) senkrechte(s) Leitung(srohr) (26) beinhaltet, das mit dessen Innenraum (38) verbunden ist, wobei die senkrechten Leitungen/Leitungsrohre der übereinanderliegenden Behältnisse hintereinander angeordnet und untereinander in undurchlässiger Art verbunden sind, wobei mindestens eine(s) der senkrechten Leitungen/Leitungsrohre (26) dazu geeignet ist, wahlweise mit der Unterdruckpumpe (31) und der ,Quelle' für komprimierte Luft (34) verbunden zu werden.

9. Vorrichtung gemäß Patentanspruch 7 oder 8, dadurch gekennzeichnet, dass jede Scheibe (29) gegen den Boden (22) des Behältnisses (21) abgegrenzt ist, das unmittelbar oberhalb einer Kammer (39) liegt, die mit der Außenluft verbunden ist.

10. Vorrichtung gemäß irgendeinem der Patentansprüche 6 bis 9, dadurch gekennzeichnet, dass der Boden (22) eines jeden Behältnisses (21) mit Rippen (41) ausgestattet ist, auf denen die entsprechende Form (23) befestigt ist.

11. Vorrichtung gemäß Patentanspruch 6, dadurch gekennzeichnet, dass der Behälter (49) drehbar angebracht ist, wobei jede Form (2) radial angeordnet ist, während die zugeordnete Scheibe (4) gegen die Drehachse (50) des Behälters (49) gedreht wird und eine lose Masse (48) direkt auf jeder Scheibe lagert.

## Claims

1. A process of pressing out the lactoserum contained in curd (24) disposed in a microperforated cheese mould (23), which is placed within a sealed enclosure (21), characterized in that it comprises performing at least two pressing cycles each comprising a first phase, in which a pressure is applied on the curd contained in the mould while at the same time a depression is created within the enclosure, and an second phase, in which the application of pressure on the curd is stopped while at the same time a pressure at least equal to the atmospheric pressure is created within the enclosure.

2. The process according to claim 1, characterized in that each pressing cycle has a duration of approximately 30 minutes.

3. The process according to claim 1 or 2, characterized in that each pressing cycle may be repeated up to ten times according to the nature of the curd.

4. The process according to any of the preceding claims, characterized in that the durations of the first and second phases of each cycle are of the order of 20 to 25 min and 30 seconds to 2 min, respectively.

5. The process according to any of the preceding claims, characterized in that the pressure on the curd is of the order of 10⁴ to 5.10⁴ Pa and the depression within the enclosure is of the order of 10³ to 3.10⁴ Pa during the first phase, while the pressure within the enclosure is an overpressure less than or equal to 10⁴ Pa during the second phase.

6. An installation for implementing the process according to any of the preceding claims, comprising a sealed enclosure (21, 49) holding at least one microperforated cheese mould (23) containing curd (24), a platen (29) in contact with the curd through a plate (27), pressing means for moving the platen towards the curd, a vacuum source (31) for creating a depression within the enclosure, and means (34) for creating a pressure at least equal to the atmospheric pressure within the enclosure, characterized in that
- the plate (27) is resting on the curd (24) and supports a part (28), which is integral with the platen (29) ;
- the enclosure consists of a vertical container (21) comprising a bottom (22), on which the mould (23) is supported and a side wall (25), along which the platen (29) is sealingly movable; and
- the pressing means consists of a depression (D) created within the container (21).

7. The installation according to claim 6, characterized in that the container (21) supports at least one second vertical container (21) comprising a bottom (22), on which a second mould (23) containing curd (24) is supported and a side wall (25), along which a second platen (29) is sealingly movable, said second platen being integral with a second part (28), which is supported by a second plate (27) resting on the curd, connecting means (27, 37) being further provided for interconnecting the internal volumes (38) of the stacked containers (21).

8. The installation according to claim 7, characterized in that each container (21) comprises at least one vertical duct (26) communicating with its internal space (38), the vertical ducts of the stacked containers being sequentially disposed and sealingly interconnected, at least one of said vertical ducts (26) being selectively connectable to the vacuum pump (31) and compressed air source (34).

9. The installation according to claim 7 or 8, characterized in that each platen (29) together with the bottom (22) of the immediately above-located container (21) defines a chamber (39), which is connected to the atmosphere.

10. The installation according to any of claims 6 to 9, characterized in that each container (21) is provided on its bottom (22) with ribs (41), on which the respective mould (23) is secured.

11. The installation according to claim 6, characterized in that the enclosure (49) is rotatably mounted, each mould (2) being disposed radially, and the associated platen (4) is facing towards the rotation axis (50) of the enclosure (49), a removable mass (48) being directly supported on each platen.
